# EUROPEAN PATENT APPLICATION

(11) **EP 1 199 786 A1**
(43) Date of publication of application: **24.04.2002**
(21) Application number: 01120295.9
(22) Date of filing: 24.08.2001
(51) Int. Cl.: H02K 5/20, H02K 9/19, H02K 15/14

(54) **Method for manufacturing a double-walled, metallic housing for an electric rotating machine**

(30) Priority: 17.10.2000 LU 90655
(71) Applicant: Delphi Technologies, Inc., Troy, MI 48007 (US)
(72) Inventor: Kneppers, Gerhard J., 7762 Bissen (LU); Struckman, Fritz, 71287 Weissach (DE)
(74) Representative: Beissel, Jean

(57) **Abstract**

A method for manufacturing a double-walled, metallic housing for an electric rotating machine, a coolant passage for a fluid coolant being defined between said wall parts, said method comprises the steps of:
manufacturing an inner wall part having at least one annular contact surface;
manufacturing an outer wall part having a corresponding annular contact surface;
fitting the inner wall part into the outer wall part so that the annular contact surface of the inner wall part abuts against the corresponding annular contact surface of the outer wall part for fixing the wall parts together and closing the coolant passage; and
creating a relative rotary movement between the wall parts while pressing the annular contact surfaces against each other so as to friction weld the annular contact surface of the inner wall part with the annular contact surface of the outer wall part, thereby fixing the wall parts together and sealingly closing the coolant passage.

## Description

### Field of the invention

The present invention generally relates to a method for manufacturing a double-walled, metallic housing for an electric rotating machine.

### Background of the invention

Double walled, metallic housings are conventionally used in the manufacture of generators, also called alternators, for accommodating therein generator components such as e.g. rotor, stator, rotor shaft and suitable electronics. A liquid coolant, generally water, is circulated between the housing walls in order to cool down the generator components.

Typically, double-walled housings are manufactured by means of lost foam processes or sand casting processes. Such processes are employed because they allow to manufacture in one piece an essentially cylindrical or pot-shaped housing with an inner wall part enclosed in an outer wall part so as to provide a coolant passage therebetween. However, these processes are relatively expensive and have high reject rates due to poor material structure, e.g. porosities. In some cases porosities can be fixed by impregnation, which increases the manufacturing costs. Moreover, the coolant passage is often polluted by sand and/or coating rests, which means that the coolant passage of each housing has to be checked by hand.

US 6,046,520 discloses a liquid cooled generator having a double-walled generator housing. The housing includes a pot-shaped inner wall part with an annular connecting flange surrounding its opening. The housing further includes a pot-like shell, which represents an outer wall part. This outer wall part has an annular connecting flange surrounding its opening and abutting against the annular connecting flange of the inner wall part. Moreover, the outer wall part encloses the inner wall part in a spaced relationship so as to form therebetween a coolant passage. The contact flange of the inner wall part is screwed onto the contact flange of the outer wall part by means of mounting bolts so as to fix the two wall parts together and close the coolant passage. From a manufacturing point of view, such a housing is interesting as it does not require a complex process for producing the housing in one piece. Indeed, the two pot-shaped wall parts can each be manufactured by a simple process such as injection molding. However, the manufacture of such a housing is complicated by the necessity of screwing the mounting bolts and of ensuring a sealed connection of the two flanges to avoid leaking of the coolant passage.

### Object of the invention

The object of the present invention is to provide a simple method for manufacturing a double-walled, metallic housing for an electric rotating machine. This object is solved by a method as claimed in claim 1.

### Summary of the invention

The present invention relates to a method for manufacturing a double-walled metallic housing for an electric rotating machine, in which a housing is manufactured from two distinctive wall parts, between which, when fitted together, a coolant passage for a fluid coolant is defined. Accordingly, the method in accordance with the invention comprises a first manufacturing step of manufacturing an inner wall part having at least one annular contact surface. Then an outer wall part having a corresponding annular contact surface is manufactured. This outer wall part is designed so that, when the inner wall part is fitted into the outer wall part, this corresponding annular contact surface of the outer wall part abuts against the annular contact surface of the inner wall part for fixing the wall parts together and closing the coolant passage. Then, the inner wall part is fitted into the outer wall part. It shall be appreciated that in the next manufacturing step, a relative rotary movement is created between the wall parts, while pressing the annular contact surface of the inner wall part against the annular contact surface of the outer wall part, so as to friction weld the annular contact surface of the inner wall part with the annular contact surface of the outer wall part, thereby fixing the wall parts together and sealingly closing the coolant passage.

The method of the invention proves very advantageous over the conventional methods. The two wall parts can be manufactured easily by means of simple and rapid processes such as e.g. injection molding or casting. This also means that problems of poor material structure or of coolant passage pollution, which are inherent to conventional sand casting and lost foam processes, can be avoided. Moreover, friction welding permits to rapidly and sealingly weld the annular surfaces, without any additional sealing material or fixing means. As a result, the method of the invention is simpler, faster and less expensive than conventional methods. It is clear that, in order to be able to friction weld the annular contact surfaces together, the inner and outer wall parts must be designed in such a way that the inner wall part can turn in the outer wall part when the annular contact surfaces are abutted. Besides, it will be understood that, in order to be friction welded, the annular contact surfaces need to be rotationally symmetrical. In their abutted configuration, the axes of the annular contact surfaces should preferably be coaxial. It is also clear that the annular contact surfaces should extend inwardly or outwardly from the wall parts with respect to this axis in order to be able to press them axially against each other for friction welding. For example, the annular contact surface can be a planar ring, which is then included in a plane perpendicular to the axis. However, the annular contact surface could also be a conical surface. A generatrix of such a conical surface should preferably be at least 45° with respect to the axis. It remains to be noted that the profile of the annular contact surfaces can be varied, provided that it remains rotationally symmetrical so as to allow friction welding. The annular contact surface of the inner wall part could e.g. have an annular groove and the corresponding annular contact surface of the outer wall part would thus have an annular rib fitting in said groove.

In a preferred embodiment, the inner wall part is essentially formed as a cup having at its outer periphery front and rear annular contact surfaces. The outer wall part is essentially formed as a cylinder having on its inner surface front and rear annular contact surfaces which correspond to the front and rear annular contact surfaces of the inner wall part. The coolant passage is then formed by an annular space defined between the inner and outer wall parts and between the front and rear annular contact surfaces. Hence, the cylindrical part of the housing can be cooled, thereby e.g. ensuring especially the cooling of stator windings. If the bottom part of the cup-formed inner wall part is to be cooled as well, the latter shall advantageously be provided with a double-walled bottom. The front annular contact surface should thus surround the opening of this cup-formed inner wall part and its rear annular surface should surround the outer wall part of the bottom so that the coolant passage is formed by the annular space and the double-walled bottom.

In an alternative embodiment, the inner wall part is essentially formed as a cylinder having front and rear annular contact surfaces, at least the front annular contact surface being located at the outer periphery of the inner wall part. The outer wall part is essentially formed as a cup having on its inner surface front and rear annular contact surfaces which correspond to the front and rear annular contact surfaces of the inner wall part. The coolant passage is thus formed by an annular space defined between the inner and outer wall parts and between the front and rear annular contact surfaces.

In a further embodiment, the inner wall part is pot-shaped and its annular contact surface surrounds its opening. The outer wall part is a pot-like shell having an annular contact surface, which surrounds its opening and which, after fitting with the inner wall part, abuts against the annular contact surface of the outer wall part. Moreover, the outer wall part encloses the inner wall part in spaced relationship so as to form the coolant passage. In such an embodiment, the fluid coolant can be circulated in the cylindrical part of the housing as well as in its bottom.

In order to allow a fluid coolant to circulate in the coolant passage, the latter is advantageously provided with a coolant inlet and a coolant outlet, which can be arranged on either one of the two wall parts.

Although the inner and outer wall parts may be made of a variety of metals or alloys, aluminum is preferred, especially for improved heat exchange conditions.

In order to protect and bound welding zones, the annular contact surfaces may be bordered by one or two annular ribs. The same result can be achieved by providing an annular groove in one of the annular contact surfaces, in which the corresponding annular contact surface can be received.

As already mentioned, the inner wall part and the outer wall part can be manufactured by means of injection molding or casting processes. This possibility of choosing the method of manufacturing of each wall part is very interesting. For example, if housings having a same internal structure (i.e. with a same inner wall part) are to be produced with different outer structures (i.e. outer wall parts), the manufacturing method of each wall part should thus be chosen in function of their manufacturing volume. Indeed, the inner wall part should be manufactured by injection molding, as the large number of parts to be produced would justify the cost, whereas the different outer wall parts should be cast, as it is more adapted for producing small quantities at low costs.

### Brief description of the drawings

The present invention will now be described, by way of example, with reference to the accompanying drawings, in which:
- Fig.1:: is a cross-sectional view of a double-walled, aluminum housing manufactured in accordance with a first embodiment of the method of the invention;
- Fig.2:: is a cross-sectional view of a double-walled, aluminum housing manufactured in accordance with a second embodiment of the method of the invention;
- Fig.3:: is a cross-sectional view of a double-walled, aluminum housing manufactured in accordance with a third embodiment of the method of the invention;
- Fig.4:: is a cross-sectional view of a detail of a welding zone;
- Fig.5:: is a cross-sectional view of a double-walled, aluminum housing manufactured in accordance with a fourth embodiment of the method of the invention.

### Detailed description of a preferred embodiment

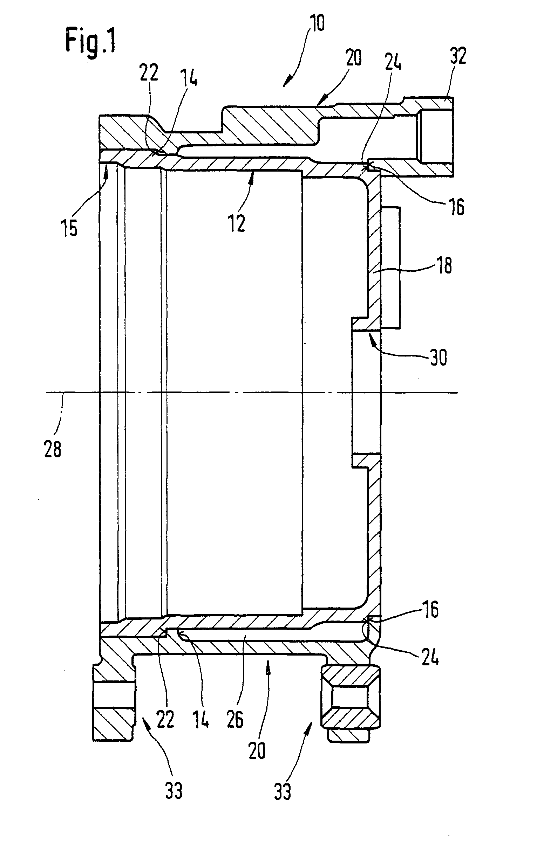

In Fig.1 a double-walled housing 10 manufactured in accordance with a first embodiment of the method of the invention is shown in cross-sectional view. Reference sign 12 indicates an aluminum inner wall part formed as a cup by means of injection molding. Its inner surface is adapted to receive generator (alternator) components therein; however it could alternatively be adapted to receive electrical motor components. A front annular contact surface 14 surrounds the opening 15 of this cup-formed wall part 12 and a rear annular contact surface 16 surrounds its bottom 18. Reference sign 20 indicates a cylindrical outer wall part made of aluminum and manufactured by means of injection molding. As can be seen, the inner wall 12 part fits in the outer wall part 20. The outer wall part 20 has on its inner surface a front annular surface 22 corresponding to the front annular surface 14 of the outer wall part 12 as well as a rear annular surface 24 corresponding to the rear annular contact surface 16 of the inner wall part 12. In this assembled configuration, an annular coolant passage 26 for a preferably liquid coolant, such as e.g. water or oil, is defined between the wall parts 12, 20 and the abutted annular contact surfaces 14, 22, and 16, 24 respectively. As can be seen, the annular contact surfaces 14, 16 of the inner wall part 12 extend outwardly with respect to the axis 28, which also indicates the central axis of the housing. The annular contact surfaces 22, 24 of the outer wall part 20 extend inwardly with respect to the axis 28. Moreover, all these annular contact surfaces 14, 16, 22, 24 are centered about the axis 28 and are each in a plane essentially perpendicular to the axis 28. In other words, the annular contact surfaces 14, 16, 22 and 24 are rotationally symmetrical with respect to the axis 28.

It shall be appreciated that, in accordance with the present method, the corresponding annular contact surfaces 14, 22, and 16, 24 respectively, have been fixed together by means of friction welding. This friction welding step is carried out by creating a relative rotary movement between the two wall parts 12 and 20 about the axis 28, while axially pressing the two wall parts 12 and 20 against each other, in such a way as to create sufficient frictional heat at the interface between the corresponding contact surfaces 14, 22, and 16, 24 respectively, to reach the welding temperature. As a result, the two wall parts 12 and 20 are fixed together and the coolant passage 26 is sealingly closed.

The bottom 18 of the inner wall part 12 has a through hole 30 for supporting a roller bearing of a rotor shaft (not shown). Besides, the housing 10 is provided on its outer wall part 20 with a coolant inlet, indicated 32 on Fig.1, and with a coolant outlet (situated above the cutting plane). The outer wall part 20 is further provided with mounting bushings 33, for mounting the housing 10 in an engine.

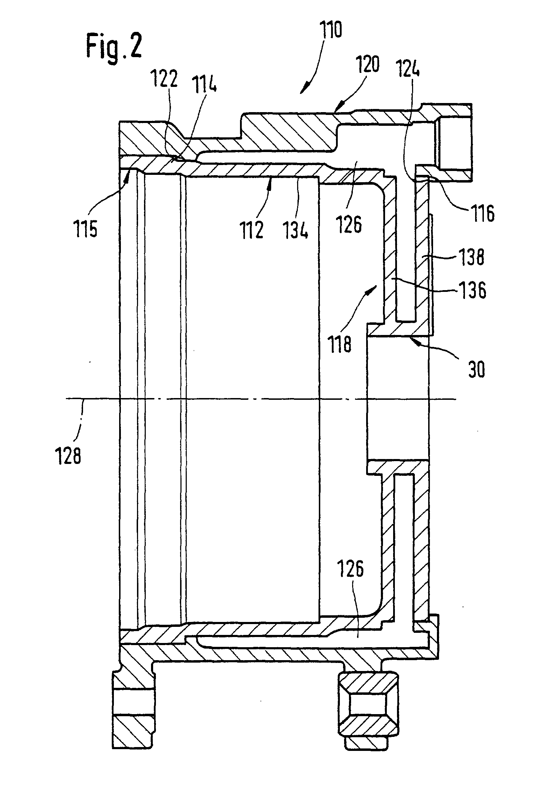

Fig.2 shows a double-walled metallic housing 110 manufactured in accordance with a second embodiment of the method of the invention. The inner wall part 112 of this housing 110 has a double-walled bottom 118. Such an inner wall part 112 can be manufactured by injection molding in a bi-directional mold. It comprises a cylindrical part 134, an inner bottom part 136 adjacent to the latter, and an outer bottom part 138, the inner and outer bottom parts 136 and 138 being spaced. The front annular contact surface 114 surrounds the opening 115 of the inner wall part 112 and is in contact with the corresponding front annular surface 122 of the outer wall part 120. The rear annular surface 116 of the inner wall part 112 is provided around the outer bottom face 138 and correspond to the rear annular contact surface 124 of the outer wall part 120, so that the coolant passage 126 is formed by the annular space between the cylindrical part 134 and the outer wall part 120 and the bottom of the inner wall part 12. Here again, the annular contact surfaces 114, 116, 122 and 124 are coaxially arranged about a single axis 128, and extend perpendicularly with respect to this axis 128. These annular contact surfaces have been friction welded together, as described above, thereby assuring the fixation of the wall parts 112 and 120 and the closing of the coolant passage 126.

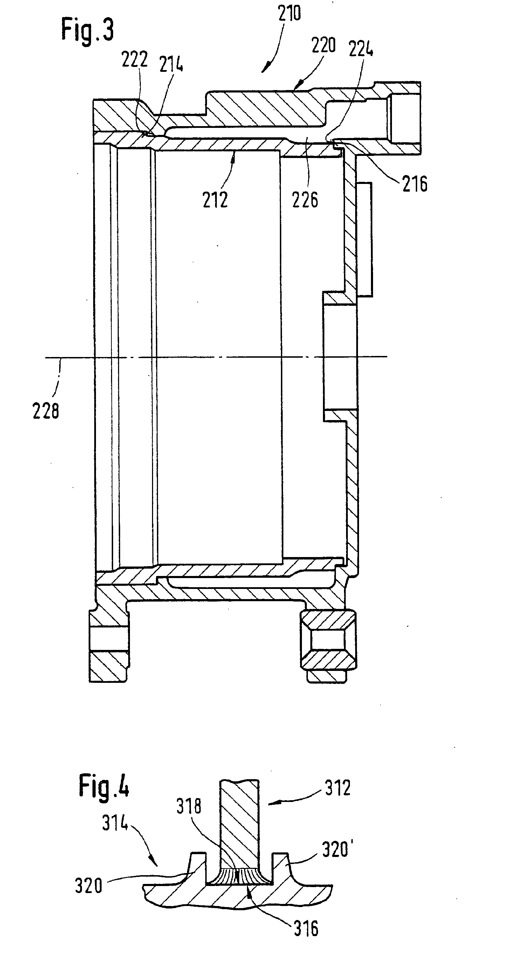

Turning now to Fig.3, a double-walled metallic housing 210 manufactured in accordance with a third embodiment of the method of the invention is shown. According to this third embodiment, the inner wall part 212 is a cylindrical part made of aluminum and manufactured by injection molding . It has front and rear annular contact surfaces 214 and 216 on its outer surface. The outer wall part 220, which is made of aluminum as well, is formed as a cup by injection molding. It has on its inner surface a front annular contact surface 222 corresponding to the front contact surface 214 of the inner wall part 212 and a rear annular contact surface 224 corresponding to the rear contact surface 216. These annular contact surfaces 214, 222, and 216, 224 respectively, are coaxial about a single axis 228 and extend perpendicularly to this axis 228. They have been friction welded together, as for the first and second embodiments. As a result, the two wall parts 212 and 220 are fixed together and the coolant passage 226 formed by the annular space defined between the wall parts 12 and 20 and the annular contact surfaces is sealingly closed.

Fig.4 shows a detail of a welding zone in cross-sectional view, which illustrates an advantageous design of the welding zone, however not used in the other described embodiments. In this example, the inner wall part is indicated 312 and the outer wall is indicated 314. The annular contact surface 316 of this inner wall part 312 has been welded to the annular contact surface 318 of the outer wall part 314 by friction welding. The annular contact surface 318 of the outer wall part 314 is bordered by two annular ribs 320 and 320', which protect and bound the welding zone. The same effect can be achieved by providing a rectangular groove in the annular contact surface 318 of the outer wall part 314, in which the annular contact surface 316 of the inner wall part 312 can be received.

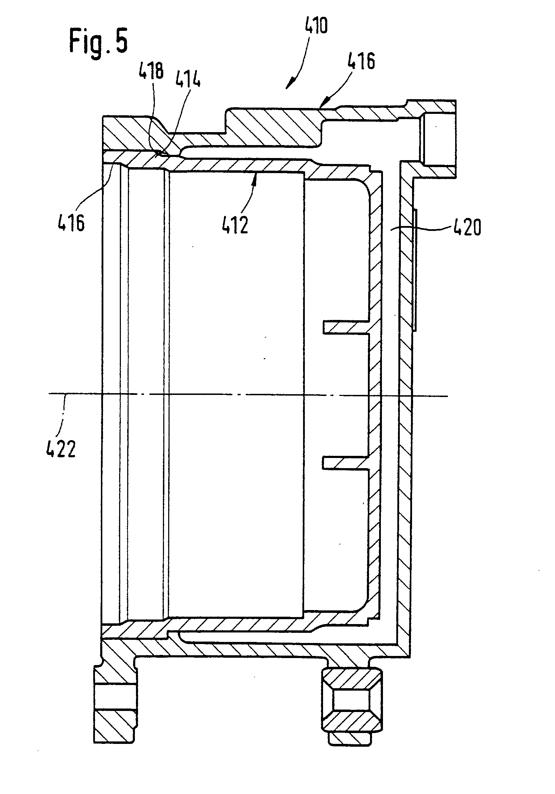

A further double-walled aluminum housing 410 manufactured in accordance with another embodiment of the method of the invention is shown in Fig.5. It comprises a pot-shaped inner wall part 412 manufactured by injection molding and having an annular contact surface 141 surrounding its opening 416. An outer wall part 416, manufactured by injection molding, is formed as a pot-like shell and has an annular contact surface 418. As can be seen, the inner wall part fits 412 in the outer wall part 416 in such a way that the annular contact surfaces 414 and 418 abut against each other. The outer wall part 416 encloses the inner wall part 418 in spaced relationship so that a coolant passage 420 is formed between the two wall parts. The two annular contact surfaces 141 and 418 are rotationally symmetric and coaxially arranged about the axis 422. The contact surfaces 414, 418 are in fact two planar rings in a plane perpendicular to the axis 422. It shall be appreciated that the two annular contact surfaces 414, 418 have been fixed together as a result of friction welding, carried out by creating a relative rotary movement between the two wall parts 412, 416 about the axis 422, while axially pressing the two wall parts 412 and 416 against each other. As a result, the two wall parts 412 and 416 are fixed to each other and the coolant passage 420 is sealingly closed.

It shall be noted that the annular contact surfaces may be part of corresponding, outwardly extending connecting flanges surrounding the opening of the housing. The two annular contact surfaces would then both extend outwardly.

It is clear that in the described embodiments the inner wall part can turn in the outer wall part when they are assembled so as to allow friction welding of the annular contact surfaces.

## Claims

1. A method for manufacturing a double-walled, metallic housing for an electric rotating machine, a coolant passage for a fluid coolant being defined between said wall parts, said method comprising the steps of:
manufacturing an inner wall part having at least one annular contact surface;
manufacturing an outer wall part having a corresponding annular contact surface;
fitting said inner wall part into said outer wall part so that said annular contact surface of said inner wall part abuts against said corresponding annular contact surface of said outer wall part for fixing said wall parts together and
closing said coolant passage;
**characterized by the step of**
creating a relative rotary movement between said wall parts, while pressing said annular contact surface of said inner wall part against said annular contact surface of said outer wall part, so as to friction weld said annular contact surface of said inner wall part with said annular contact surface of said outer wall part, thereby fixing said wall parts together and sealingly closing said coolant passage.

2. The method according to claim 1, **characterized in that**
said inner wall part is essentially formed as a cup having at its outer periphery front and rear annular contact surfaces; and
said outer wall part is essentially formed as a cylinder having on its inner surface front and rear annular contact surfaces which correspond to said front and rear annular contact surfaces of said inner wall part, said coolant passage being formed by an annular space between said inner and outer wall parts and between said front and rear annular contact surfaces.

3. The method according to claim 2, **characterized in that** said inner wall part is essentially formed as a cup with a double-walled bottom, said front annular contact surface surrounding an opening of said cup-formed inner wall part and said rear annular surface surrounding an outer bottom part of said bottom so that said coolant passage is formed by said annular space and said double-walled bottom.

4. The method according to claim 1, **characterized in that**
said inner wall part is essentially formed as a cylinder having front and rear annular contact surfaces, at least said front annular contact surface being located at the outer periphery of said inner wall part; and
said outer wall part is essentially formed as a cup having on its inner surface front and rear annular contact surfaces which correspond to said front and rear annular contact surfaces of said inner wall part, said coolant passage being formed by an annular space between said inner and outer wall parts and between said front and rear annular contact surfaces.

5. The method according to claim 1, **characterized in that**
said inner wall part is pot-shaped and its annular contact surface surrounds its opening; and
said outer wall part is a pot-like shell and its annular contact surface surrounds its opening in such a way that, after fitting with said inner wall part, said annular contact surface of said outer wall part abuts against said annular contact surface of said inner wall part, and said outer wall part encloses said inner wall part in spaced relationship so as to form said coolant passage.

6. The method according to anyone of the preceding claims, **characterized in that** at least one of said annular contact surfaces is bordered by an annular rib.

7. The method according to anyone of the preceding claims, **characterized in that** said inner and outer wall parts are made of aluminum.

8. The method according to anyone of the preceding claims, **characterized in that** said inner wall part and said outer wall part are manufactured by means of injection molding or casting processes.

9. A double-walled, metallic housing for an electric rotating machine, comprising:
an inner wall part having at least one annular contact surface;
an outer wall part, in which said inner wall part is fitted, having a corresponding annular contact surface, which abuts against said annular contact surface of said inner wall part for fixing said wall parts together and closing a coolant passage defined between said wall parts;
**characterized in that** said annular contact surfaces are fixed together as a result of friction welding, whereby fixing said wall parts together and sealingly closing said coolant passage.
